(19) Europäisches Patentamt
European Patent Office
Office européen des brevets

(11) Veröffentlichungsnummer : **0 458 794 B1**

# (12) EUROPÄISCHE PATENTSCHRIFT

(45) Veröffentlichungstag der Patentschrift :
**08.09.93 Patentblatt 93/36**

(51) Int. Cl.$^5$ : **H02P 7/622,** H02M 5/257

(21) Anmeldenummer : **90901752.7**

(22) Anmeldetag : **19.01.90**

(86) Internationale Anmeldenummer :
**PCT/DE90/00030**

(87) Internationale Veröffentlichungsnummer :
**WO 90/09701 23.08.90 Gazette 90/20**

## (54) VERFAHREN UND VORRICHTUNG ZUR STEUERUNG VON EIN- ODER MEHRPHASIGEN WECHSELSTROMSTELLERN.

(30) Priorität : **07.02.89 EP 89102065**

(43) Veröffentlichungstag der Anmeldung :
**04.12.91 Patentblatt 91/49**

(45) Bekanntmachung des Hinweises auf die Patenterteilung :
**08.09.93 Patentblatt 93/36**

(84) Benannte Vertragsstaaten :
**AT CH DE FR GB IT LI SE**

(56) Entgegenhaltungen :
**EP-A- 379 608**
**GB-A- 2 084 359**

(56) Entgegenhaltungen :
**US-A- 4 413 217**
**ELECTRONIC COMPONENTS AND APPLICATIONS, Vol. 4, No. 4, August 1982, Eindhoven, NL, pp 207-214**

(73) Patentinhaber : **SIEMENS AKTIENGESELLSCHAFT**
**Wittelsbacherplatz 2**
**D-80312 München (DE)**

(72) Erfinder : **RUNGGALDIER, Diethard**
**Runggaldier 5**
**D-8602 Stegaurach (DE)**
Erfinder : **DOERWALD, B., Claus**
**Gablonzer Strasse 3**
**D-8552 Höchstadt (DE)**



Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Verfahren und Vorrichtung zur Steuerung von ein- oder mehrphasigen Wechselstromstellern

Die Erfindung bezieht sich auf Verfahren und eine Vorrichtung zur Steuerung von ein- oder mehrphasigen Wechselstromstellern durch Phasenanschnittsteuerung von Halbleiter-Ventilen.

Zur Regelung der in einem Wechselstromnetz einer elektrischen Last zugeführten Leistung werden Wechselstromsteller verwendet, die durch Phasenanschnittsteuerung von Halbleiter-Ventilen gesteuert werden. Insbesondere beim Betrieb eines Wechselstrommotors erfordern wechselnde Betriebsbedingungen wie z.B. unterschiedliche Belastungen des Motors während Start- oder Verzögerungsphasen beim Ein- und Ausschalten eine Regelung der dem Motor zugeführten Leistung, um das Netz, den Motor und den Antrieb vor unnötigen Belastungen zu schützen.

Aus der britischen Patentschrift 2 084 359 ist eine Vorrichtung zur Steuerung eines Wechselstromstellers für einen Wechselstrommotor bekannt, mit der ein beispielsweise durch Unterbelastung des Motors hervorgerufener ungünstiger Leistungsfaktor verbessert werden soll. Dazu sind dem Motor für jede Versorgungsphase steuerbare Halbleiter-Ventile, insbesondere ein Triac oder eine antiparallele Thyristorschaltung, zugeordnet, die über Phasenanschnittsteuerung eine von den aktuellen Betriebsbedingungen des Motors abhängige Leistungszufuhr ermöglichen. Eine Verbesserung des Leistungsfaktors wird bei dieser bekannten Vorrichtung dadurch erreicht, daß in einer Steuereinrichtung der Phasenunterschied zwischen Strom und Spannung für jede Phase detektiert und durch eine entsprechende Vergrößerung des Zündwinkels, d.h. des Zeitraums, der zwischen dem Stromnulldurchgang und dem Zündzeitpunkt für die jeweilige Phase verstreicht, verringert wird.

Als Zeitreferenz für die Ermittlung des Zündzeitpunkts wird bei der bekannten Vorrichtung der Zeitpunkt des Stromnulldurchganges verwendet, der durch Messung der über dem Triac anliegenden Spannung ermittelt wird. Diese Spannung wird einem Komparator zugeleitet, dessen Ausgangszustände den Schaltzuständen dieses Triacs entsprechen. Durch diese Schaltung wird die Phasenverschiebung zwischen Motorstrom und Motorspannung und somit der Leistungsfaktor auf einen Wert stabilisiert, der durch die am Potentiometer eingestellte Referenzspannung gegeben ist.

Es ist jedoch auch bekannt, einen Zeitpunkt für ein Referenzsignal zu ermitteln, wenn vorher ein Stromnulldurchgang nicht registriert worden ist. Man kann nämlich den Steuerwinkel auch aus dem Verlauf der Spannung ableiten (Electronic Components and Applications, Vol. 4, No. 4, Aug. 1982, Seiten 207 bis 214).

Bei der Ermittlung der Zeitpunkte für die Stromnulldurchgänge durch Messung des am Halbleiter-Ventil anliegenden Spannungsabfalls hat jedoch in der Praxis gezeigt, daß insbesondere bei induktiven Lasten durch induzierte Spannungen Rückwirkungen auftreten können, die eine zuverlässige Bestimmung der Zeitpunkte der Stromlöschung erschweren. Durch die beispielsweise von einem weiterdrehenden Rotor ausgehenden induktiven Rückwirkungen kann es dann vorkommen, daß die über dem Halbleiter-Ventil gemessene Spannung den zum Umschalten des Komparators erforderlichen Schwellwert nicht erreicht, so daß im zeitlichen Ablauf der Zündfolge Störungen auftreten. Bei mehrphasigen Wechselstrommotoren können sich dann Gleichstromanteile aufbauen, die zu stoßartigen Belastungen des Motors führen können.

Um derartige Störungen weitgehend auszuschalten, ist es erforderlich, den Schwellwert für den Komparator so niedrig wie möglich zu wählen. Mit dieser Maßnahme nimmt man jedoch eine zunehmende Empfindlichkeit und Störungsanfälligkeit in Kauf, die von Netzstörungen und induktiven Spannungsstößen beim Steuern induktiver Lasten verursacht wird.

Bei der Ermittlung eines Referenzzeitpunktes für die zeitliche Steuerung der Phasenanschnitte muß deshalb hinsichtlich der Empfindlichkeit der Meßeinrichtung für die Referenzzeitpunkte stets ein Kompromiß gefällt werden.

Der Erfindung liegt somit die Aufgabe zugrunde, ein Verfahren zur Steuerung von ein- oder mehrphasigen Wechselstromstellern anzugeben, das bei hoher Betriebssicherheit weitgehend unempfindlich gegen äußere Störungen ist. Außerdem soll eine Vorrichtung zur Durchführung des Verfahrens zur Verfügung gestellt werden.

Die genannten Aufgaben werden erfindungsgemäß gelöst mit den Merkmalen der Ansprüche 1 bzw. 7. Da die Halbleiter-Ventile auch dann gezündet werden, wenn das die zeitliche Abfolge der Zündsignale steuernde Referenzsignal für eine oder mehrere Perioden ausfällt, können die bei der Bildung eines Referenzsignals erforderlichen Schwellen erhöht werden, so daß eine Störung des zeitlichen Ablaufs der Zündung durch ungewollte Zündungen unwahrscheinlicher wird, ohne daß ein Aussetzen der Zündung für eine oder mehrere Phasen in Kauf genommen werden muß. Dies ist insbesondere bei der Steuerung von Motoren von Vorteil, da durch diese Maßnahmen ein weniger störungsanfälliger Betrieb ermöglicht wird.

Der zeitliche Abstand zwischen dem Zündsignal und dem nachfolgenden Sicherheits-Zündsignal kann dabei konstant sein und entspricht vorzugsweise einem Winkelabstand von etwa 180°.

In einer bevorzugten Ausgestaltung des erfindungsgemäßen Verfahrens ist ein veränderlicher zeitlicher Abstand vorgesehen, der von der Anzahl der zeitlich hintereinander fehlenden oder zu spät kommenden Referenzsignale abhängt. Von einer Periode zur anderen können nämlich Schwankungen in der Phasenlage von Strom und Spannung auftreten, die dazu führen können, daß das nachfolgende Referenzsignal um mehr als 180° verschoben ist. Bei Zündwinkeln, die im Bereich dieser Schwankungsbreite liegen, kann dies zu einer unerwünschten Dauerzündung führen. Um dies zu vermeiden, ist für das erste Sicherheits-Zündsignal ein zeitlicher Abstand vorgesehen, der einem Winkel entspricht, der größer als 180°, vorzugsweise etwa 185° ist. Um zu verhindern, daß sich die damit in Kauf genommene Phasenverschiebung aufaddiert, wenn dann für die nächsten Perioden das Referenzsignal mehrmals hintereinander ausfällt, ist in einer besonders bevorzugten Ausgestaltung des Verfahrens vorgesehen, den zeitlichen Abstand zum nächsten Sicherheits-Zündsignal kleiner als 180°, beispielsweise 175°, zu wählen. Bei N zeitlich aufeinanderfolgenden Sicherheits-Zündsignalen ist dann darauf zu achten, daß deren jeweiligen Zeitabstände $P_1$, $P_2$, ..,... $P_{n-1}$, $P_n$,..$P_N$ die Bedingung

$$\left| \sum_{n=1}^{N} (P_n f \cdot 360°) - N \cdot 180° \right| < F$$

erfüllen, wobei f die Netzfrequenz und F den erlaubten Phasenfehler darstellt, der stets kleiner als 15°, vorzugsweise kleiner als 10° sein soll.

Das Referenzsignal dient dabei im wesentlichen zum Ableiten einer Zeitreferenz für die Steuerung und kann aus charakteristischen Punkten des zeitlichen Strom- oder Spannungsverlaufs abgeleitet werden. Als charakteristische Zeitpunkte für das Ermitteln eines Referenzsignales sind insbesondere die Stromnulldurchgänge von Vorteil, die dann vorzugsweise aus dem Spannungsabfall am Halbleiter-Ventil abgeleitet werden. Dieses Referenzsignal liegt in einer vorteilhaften Ausgestaltung der Erfindung in Form eines binären Signals mit zwei Pegeln vor, dessen Flanken für die Steuerung der Zeitabläufe besonders gut geeignet sind.

Zur weiteren Erläuterung der Erfindung wird auf die Zeichnung verwiesen, in deren

Figur 1 eine Vorrichtung zur Durchführung des Verfahrens gemäß der Erfindung in einem Blockschaltbild veranschaulicht ist. In

Figuren 2 bis 5 sind zur Erläuterung des erfindungsgemäßen Verfahrens die für das Steuern des Zündvorganges verwendeten elektrischen Signale jeweils in einem Diagramm gegen die Zeit aufgetragen.

Figur 6 zeigt eine eine vorteilhafte Ausgestaltung einer Vorrichtung zur Durchführung des Verfahrens gemäß der Erfindung in einem Blockschaltbild, deren Funktionsweise anhand der in

Figur 7 dargestellten Flußdiagramme näher erläutert wird.

Entsprechend Figur 1 ist eine Last, beispielsweise ein Motor 2 über ein Halbleiter-Ventil 4, beispielsweise ein Triac oder eine Schaltung aus mehreren Halbleiter-Ventilen, beispielsweise eine Thyristorschaltung, an die Phase eines einphasigen Wechselstromnetzes angeschlossen. Das Halbleiter-Ventil 4 ist mit einer Steuerelektrode 5 versehen und Teil einer Zündeinrichtung 10, die einen für das Halbleiter-Ventil 4 erforderlichen Zündverstärker 12, beispielsweise ein Optotriac oder ein Zündtransformator, enthält. Anstelle eines elektrisch gezündeten Halbleiter-Ventils 4 kann auch ein optisch gezündetes Halbleiter-Ventil vorgesehen sein.

Die Steuerung des Halbleiter-Ventiles 4 erfolgt durch Phasenanschnitt- oder Zündeinsatzsteuerung. An die Steuerelektrode 5 wird hierzu in Abhängigkeit von der Phasenlage ein Zündsignal angelegt, das eine Zündung des Halbleiter-Ventils 4 hervorruft.

Dem Halbleiter-Ventil 4 ist in der bevorzugten Ausführungsform gemäß der Figur ein Referenz-Detektor 6 zugeordnet, mit dem beispielsweise der Stromnulldurchgang des im Stromkreis fließenden Stromes I über den Spannungsabfall am Halbleiter-Ventil 4 erfaßt wird. Der Stromnulldurchgang dient zur Festlegung einer Zeitreferenz für die Phasenanschnittsteuerung. Ein entsprechendes Referenzsignal X wird am Ausgang 8 des Referenz-Detektors 6 bereitgestellt. Der Referenz-Detektor 6 enthält hierzu beispielsweise einen Komparator, der den Absolutwert des Spannungsabfalles über dem Halbleiter-Ventil 4 mit einem vorgegebenen Schwellwert vergleicht.

Am Ausgang 8 steht somit ein Referenzsignal X mit zwei Pegeln an. Mit dem einen Pegel wird dabei ein Zustand erfaßt, der zu einem in der Phase fließenden Strom gehört, der kleiner ist als ein dem Schwellwert zugehöriger Grenzwert. Bei entsprechend niedriger Wahl dieses Schwellwertes, beispielsweise etwa 10 V, entspricht dann dieser Pegel im wesentlichen Strom Null und das Referenzsignal X gibt im wesentlichen die Schaltzustände des Halbleiter-Ventils 4 wieder. Die Flanken zwischen diesen beiden Schaltzuständen fallen dann wenigstens annähernd zeitlich mit dem Stromnulldurchgang des durch das Halbleiter-Ventil 4 fließenden Stromes I zusammen.

Zur Festlegung einer Zeitreferenz für die Phasenanschnittsteuerung kann auch eine andere Kenngröße im zeitlichen Verlauf des Stromes, beispielsweise das Maximum oder Minimum, oder eine Kenngröße im zeitlichen Verlauf der Spannung herangezogen werden.

Der Ausgang 8 des Referenz-Detektors 6 ist mit einer Steuereinrichtung 14 verbunden, die ein zeitverzögertes Zündsignal Z ableitet und an einem Steuerausgang 141 bereitstellt. Dieses Zündsignal Z ist entweder ein aus dem vorangegangenen Zündsignal Z abgeleitetes Sicherheits-Zündsignal ZS oder ein aus dem Referenzsignal X abgeleitetes und entsprechend einem vorgegebenen Zündwinkel zeitverzögertes Zündsignal ZX.

Der Zündwinkel wird von der Steuereinrichtung 14 im Rahmen eines beispielsweise extern anwählbaren Steuerprogramms sowie extern eingebbarer Motorparameter bestimmt. Der Zündwinkel kann auch durch ein intern in der Steuereinrichtung 14 ablaufendes Programm zeitabhängig sein. So wird beispielsweise durch einen zeitabhängigen Zündwinkel, der sich ausgehend von einem vorgegebenen Anfangswert bis auf einen Minimalwert reduziert, ein Sanftstart des Motors 2 ermöglicht.

In Figur 2 ist der durch das Halbleiter-Ventil fließende Strom I und in Figur 3 der über dem Halbleiter-Ventil anstehende Spannungsabfall VT gegen die Zeit aufgetragen. Beim Löschen des Stromes zum Zeitpunkt T1 steigt der Spannungsabfall an und erreicht aufgrund der induktiven Rückwirkung vom drehenden Motor zu einem späteren Zeitpunkt T2 den zum Schalten des nachfolgenden Komparators erforderlichen Schwellwert -L. Der im Referenz-Detektor angeordnete Komparator schaltet dann entsprechend Figur 4 von einem Signalpegel 30 auf einen Signalpegel 32.

Diese beiden Signalpegel 30 und 32 entsprechen logischen Zuständen, die angeben, ob der Spannungsabfall am Halbleiter-Ventil betragsmäßig kleiner oder größer als der Schwellwert L ist. Die Signalpegel 30 und 32 sind durch eine erste, im Beispiel der Figur abfallende Flanke 34 und eine zweite, im Beispiel der Figur ansteigende Flanke 36 voneinander getrennt, die im Idealfall zum Zeitpunkt des Erreichens des Stromnullpunktes bzw. zum Zeitpunkt des Zündens korrespondieren.

Die Steuereinrichtung 14 erzeugt ausgehend von der Flanke 34 ein um eine Verzögerungszeit DT verzögertes Zündsignal Z zum Zeitpunkt T2 + DT, das ein Wiederzünden des Stromes zum Zeitpunkt T3 herbeiführt. Dieses Zündsignal Z ist vom Referenzsignal X verursacht und deshalb in der Figur 5 zusätzlich mit ZX bezeichnet.

Zum Zeitpunkt T4 löscht der Strom erneut und der Spannungsabfall VT über dem Halbleiter-Ventil steigt an, erreicht jedoch im Beispiel der Figur den zum Erzeugen einer Flanke 34 des Referenzsignals X erforderlichen Schwellwert +L nicht. Dies kann beispielsweise der Fall sein, wenn der Motor kurzfristig unterlastet wird und die in den Motorwindungen bei weiterlaufendem Motor induzierten Spannungen verhindern, daß der Spannungsabfall VT am Halbleiter-Ventil groß genug wird um den zum Schalten erforderlichen Schwellwert +L zu erreichen. In diesem Fall stellt die Steuereinrichtung zum Zeitpunkt T5 ein Sicherheits-Zündsignal ZS zur Verfügung, das um einen fest vorgegebenen zeitlichen Abstand P gegenüber dem vorhergehenden Zündsignal Z verzögert ist und ein Zünden des Stromes zum Zeitpunkt T6 herbeiführt. Dieser zeitliche Abstand P entspricht einem Winkelabstand, der vorzugsweise größer als 175° und kleiner als 185°, insbesondere etwa 180° ist.

Zum Zeitpunkt T7 löscht der Strom erneut und am Halbleiter-Ventil wird im Beispiel der Figur 3 ein Spannungsabfall erzeugt, der zum Zeitpunkt T8 den zum Schalten des Komparators erforderlichen Schwellwert -L erreicht. Nach einer Zeitverzögerung DT wird ein Zündsignal Z erzeugt, das zum Wiederzünden des Stromes zum Zeitpunkt T9 führt. Dieses Zündsignal wird wiederum von Referenzsignal X verursacht und ist deshalb in der Figur 5 ebenfalls mit der Bezeichnung ZX versehen.

In Figur 5 ist ebenfalls gestrichelt ein Sicherheits-Zündsignal ZS' eingezeichnet, das dann gesetzt werden würde, wenn innerhalb des Zeitraumes T5 + P vom Referenz-Detektor kein Referenzsignal X an die Steuereinrichtung weitergegeben wird.

Im Beispiel der Figur 5 ist auch für das Sicherheits-Zündsignal ZS' ein zeitlicher Abstand $P_2$ eingezeichnet, der dem zeitlichen Abstand $P_1$ zwischen dem Zündsignal ZX und dem Sicherheits-Zündsignal ZS entspricht. In einer varteilhaften Ausgestaltung kann beispielsweise zur Vermeidung der Gefahr einer Dauerzündung bei kleinen Zündwinkeln vorgesehen sein, daß die zeitlichen Abstände $P_1$ und $P_2$ variabel sind, wobei insbesondere von Vorteil ist, wenn $P_1$ einem Winkelabstand von 180° + D und $P_2$ einem Winkelabstand von 180° - D entspricht, wobei D vorzugsweise etwa 5° beträgt, so daß allgemein die Beziehung

$$P_{2n+1} \cdot f \cdot 360° = 180° + D \text{ und } P_{2n} \cdot f \cdot 360° = 180° - D$$

erfüllt ist, wobei der Laufindex die Anzahl der hintereinander nicht von einem Referenzsignal getriggerten Sicherheits-Zündsignale darstellt. Auf diese Weise ist gewährleistet, daß auch bei mehrfach hintereinander auftretenden Sicherheits-Zündsignalen der Phasenfehler begrenzt bleibt.

Gemäß Figur 6 enthält die Steuereinrichtung in einer vorteilhaften Ausführungsform eine Kontrolleinheit 16, die mit dem Referenz-Detektor verbunden ist. Die Kontrolleinheit 16 ist mit einem freilaufenden Zähler 22 verbunden, dessen Inhalt sie zu einem Zeitpunkt liest, der vom Referenzsignal X beispielsweise durch dessen abfallende Flanke vorgegeben ist. Dieser Wert wird in einem mit der Kontrolleinheit 16 verbundenen Register 20 gespeichert. Der Zähler 22 und das Register 20 sind mit einer Vergleichseinrichtung 18 verbunden, die fortwährend den Inhalt des Zählers 22 mit dem Inhalt des Registers 20 vergleicht und bei Übereinstimmung die Kontrolleinheit 16 veranlaßt ein Zündsignal zu setzen.

In einer bevorzugten Ausführungsform enthält die Steuereinrichtung 14 einen Mikroprozessor, in dem drei asynchrone Prozesse vorgesehen sind, die anhand der Flußdiagramme gemäß Figur 7 veranschaulicht sind. In einem ersten Prozeß wird auf das Auftreten eines Referenzsignales X gewartet und beispielsweise dann, wenn eine abfallende Flanke 34 auftritt, wird zum aktuellen Inhalt TI des freilaufenden Zählers 22 eine vorgegebene Verzögerungszeit DT addiert und in das Register 20 eingeschrieben. Daneben ist ein weiterer Prozeß vorgesehen, der bei Auftreten eines Zündsignals Z, beispielsweise bei der ansteigenden Flanke des Zündsignals Z den aktuellen Inhalt TI des freilaufenden Zählers 22 ausliest, einen vorgegebenen Wert P hinzu addiert, und die Summe ebenfalls im Register 20 speichert. In einem weiteren Prozeß wird überprüft, ob der Inhalt TI des freilaufenden Zählers 22 größer oder gleich dem Inhalt T des Registers 20 ist. Wenn dies der Fall ist, wird das Setzen eines Zündsignals Z veranlaßt.

Anhand der Figuren 1 bis 7 ist die Erfindung für einphasige Wechselstrom-Steller erläutert. Die gleichen Überlegungen sind jedoch auch für jede einzelne Phase eines mehrphasigen Wechselstromstellers gültig.

## Patentansprüche

1. Verfahren zur Steuerung von ein- oder mehrphasigen Wechselstrom-Stellern durch Phasenanschnittsteuerung von Halbleiter-Ventilen (4), bei dem wenigstens aus dem in einer Phase fließenden Strom Referenzsignale (X) zum Ableiten zeitlich verzögerter Zündsignale (ZX) ermittelt werden, **dadurch gekennzeichnet**, daß aus den Zündsignalen (Z) jeweils ein in einem vorgegebenen zeitlichen Abstand (P) nachfolgendes Sicherheits-Zündsignal (ZS) stets dann abgeleitet wird, wenn innerhalb dieses zeitlichen Abstandes (P) kein Referenzsignal (X) ermittelt wird.

2. Verfahren nach Anspruch 1, **dadurch gekennzeichnet**, daß die aus den Zündsignalen (Z) abgeleiteten nachfolgenden Sicherheits-Zündsignale (ZS) um einen konstanten zeitlichen Abstand (P) verzögert sind, der einem Winkelabstand von annähernd 180° entspricht.

3. Verfahren nach Anspruch 1, **dadurch gekennzeichnet**,daß der zeitliche Abstand (P) veränderlich ist und von der Anzahl der zeitlich hintereinander fehlenden oder zu spät erfolgenden Referenzsignale X abhängt.

4. Verfahren nach Anspruch 3, **dadurch gekennzeichnet**, daß der zeitliche Abstand ($P_1$) für das erste Sicherheits-Zündsignal (ZS) einem Winkelabstand entspricht, der größer als 180° ist und kleiner als 190° ist.

5. Verfahren nach Anspruch 4, **dadurch gekennzeichnet**, daß bei N zeitlich aufeinanderfolgenden Sicherheits-Zündsignalen die Bedingung

$$\left| \sum_{n=1}^{N} (P_n f . 360^\circ) - N . 180^\circ \right| < 10^\circ$$

erfüllt ist, wobei wobei $P_1$, $P_2$, ...$P_n$, ..., $P_N$ die jeweiligen Zeitabstände und f die Netzfrequenz ist.

6. Verfahren nach einem der Ansprüche 1 bis 5 mit folgenden Merkmalen:
   a) als Referenzsignale (X) sind Signale mit zwei logischen Zuständen vorgesehen, deren einer Zustand einem Spannungsabfall am Halbleiter-Ventil (4) entspricht, der betragsmäßig größer ist als ein vorgegebener Schwellwert, und deren anderer Zustand zu einem unter diesem Schwellwert liegenden Spannungsabfall gehört,
   b) aus einer Flanke (34) zwischen diesen beiden logischen Zuständen, die einem Erreichen des Stromnullpunktes entspricht, wird ein zweiter Zeitpunkt (T2+DT) für ein zeitverzögertes Zündsignal (ZX) abgeleitet und gespeichert,
   c) aus einer Flanke des Zündsignals (Z) wird ein erster Zeitpunkt (T5) für ein zeitverzögertes nachfolgendes Sicherheits-Zündsignal (ZS) abgeleitet und gespeichert,
   d) zu dem jeweils zuletzt gespeicherten Zeitpunkt wird ein Zündsignal (ZS oder ZX) gesetzt.

7. Vorrichtung zur Durchführung des Verfahrens nach einem der Ansprüche 1 bis 6 mit einem Referenzdetektor (8) zum Ableiten von Referenzsignalen (X) sowie einer damit verbundenen Steuereinrichtung (14) zum Bereitstellen von zeitlich verzögerten Zündsignalen (Z), wobei die Steuereinrichtung (14) Mittel enthält, mit denen aus den Zündsignalen (Z) jeweils ein in einem fest vorgegebenen zeitlichen Abstand (P) nachfolgendes Zündsignal (ZS) stets dann abgeleitet werden, wenn innerhalb dieses zeitlichen Abstandes (P) kein Referenzsignal (X) ermittelt wird.

**8.** Vorrichtung nach Anspruch 7 mit einer Steuereinrichtung (14), die
a) einen freilaufenden Zähler (22),
b) eine Kontrolleinheit (16), die zu einem Zeitpunkt, der vom Referenzsignal (X) bestimmt wird, den Inhalt des Zählers (22) liest,
c) ein Register (20), das von der Kontrolleinheit (16) mit einem Wert geladen wird, der sich aus der Summe des gelesenen Inhaltes und einer vorgegebenen Verzögerungszeit (DT) ergibt, sowie
d) eine Vergleichseinrichtung (18) enthält, die den Inhalt des Zählers (22) mit dem Inhalt des Registers (20) vergleicht und in Abhängigkeit vom Vergleichsergebnis das Setzen eines Zündsignales (Z) herbeiführt.

## Claims

**1.** Process for controlling single-phase or multiphase a.c. power controllers through the phase-angle control of semiconductor valves (4), whereby reference signals (X) are detected from the current flowing in at least one phase to derive time-delayed firing signals (ZX), characterised in that in each case a safety firing signal (ZS) that follows at a specified time interval (P) is always derived from the firing signals (Z) when no reference signal (X) is detected within this time interval (P).

**2.** Process according to claim 1, characterised in that the subsequent safety firing signals (ZS) derived from the firing signals (Z) are delayed by a constant time interval (P), which corresponds to an angular distance of about 180°.

**3.** Process according to claim 1, characterised in that the time interval (P) is variable and is dependent on the number of reference signals X that are missing in succession or that come too late.

**4.** Process according to claim 3, characterised in that the time interval ($P_1$) for the first safety firing signal (ZS) corresponds to an angular distance greater than 180° and less than 190°.

**5.** Process according to claim 4, characterised in that with N successive safety firing signals, the condition

$$\left| \sum_{n=1}^{N} (P_n f \cdot 360°) - N \cdot 180° \right| < 10°$$

is satisfied, whereby $P_1$, $P_2$, ...$P_n$,..., $P_N$ are the respective time intervals and f is the system frequency.

**6.** Process according to one of claims 1 to 5 with the following features:
a) signals with two logic states are provided as reference signals (X), whose one state corresponds to a voltage drop across the semiconductor valve (4) which is greater in value than a specified threshold value, and whose other state belongs to a voltage drop that lies below this threshold value;
b) to provide a time-delayed firing signal (ZX), a second instant (T2+DT) is derived from an edge (34) between these two logic states, which corresponds to an attainment of the current zero point, and is then stored;
c) to provide a subsequent, time-delayed safety signal (ZS), a first instant (T5) is derived from an edge of the firing signal (Z) and is then stored;
d) a firing signal (ZS or ZX) is applied at the instant last stored in each case.

**7.** A device for carrying out the process according to one of claims 1 to 6 having a reference detector (8) for deriving reference signals (X) as well as a forward controlling element (14) connected to said reference detector for supplying time-delayed firing signals (Z), whereby the forward controlling element (14) comprises means with which a firing signal (ZS) that follows within a fixed preset time interval (P) is always

derived in each case from the firing signals (Z), when no reference signal (X) is detected within this time interval (P).

8. A device according to claim 7 having a forward controlling element (14), which contains
   a) a free-running counter (22);
   b) a control unit (16) which reads out the reading of counter (22) at an instant determined by the reference signal (X);
   c) a register (20) which is loaded by the control unit (16) with a value that results from the sum of the counter reading that is read out and a preset delay time (DT), as well as
   d) a comparator unit (18) which compares the reading of the counter (22) with the reading of the register (20) and, in dependence upon the result of the comparison, causes a firing signal (Z) to be applied.

## Revendications

1. Procédé pour commander des régulateurs de courant alternatif monophasés ou polyphasés au moyen d'une commande à découpage de phase de valves à semiconducteurs (4), selon lequel des signaux de référence (X) sont déterminés au moins à partir du courant circulant dans une phase, pour dériver des signaux d'amorçage retardés (ZX), caractérisé par le fait que respectivement un signal d'amorçage de sécurité (ZS), qui apparaît ensuite dans un intervalle de temps prédéterminé (P), est dérivé des signaux d'amorçage (Z) chaque fois qu'aucun signal de référence (X) n'est déterminé pendant cet intervalle de temps (P).

2. Procédé suivant la revendication 1, caractérisé par le fait que les signaux d'amorçage de sécurité suivants (ZS), qui sont dérivés des signaux d'amorçage (Z), sont retardés d'un intervalle de temps constant (P), qui correspond à une plage angulaire égale approximativement à 180°.

3. Procédé suivant la revendication 1, caractérisé par le fait que l'intervalle de temps (P) est variable et dépend du nombre des signaux de référence (X) manquants les uns à la suite des autres ou arrivant trop tard.

4. Procédé suivant la revendication 3, caractérisé par le fait que l'intervalle de temps ($P_1$) pour le premier signal d'amorçage de sécurité (ZS) correspond à un intervalle angulaire qui est supérieur à 180° et est inférieur à 190°.

5. Procédé suivant la revendication 4, caractérisé par le fait que dans le cas de N signaux d'amorçage de sécurité se succédant dans le temps, la condition

$$\left| \sum_{n=1}^{N} (P_n f . 360°) - N . 180° \right| < 10°$$

   est satisfaite, avec $P_1$, $P_2$ ..., $P_n$, ..., $P_N$ représentant les intervalles de temps respectifs et f la fréquence du réseau.

6. Procédé suivant l'une des revendications 1 à 5 présentant les caractéristiques suivantes :
   a) comme signaux de référence (X) il est prévu des signaux possédant deux états logiques, dont l'un correspond à une chute de tension dans la valve à semiconducteurs (4) et dont la valeur absolue est supérieure à une valeur de seuil prédéterminée, tandis que l'autre état est associé à une chute de tension inférieure à cette valeur de seuil,
   b) un second instant (T2 + DT) est obtenu et mémorisé pour un signal d'amorçage retardé (ZX) à partir d'un flanc (34) présent entre ces deux états logiques et qui correspond à un point de passage par zéro du courant,
   c) un premier instant (T5) pour un signal d'amorçage de sécurité suivant retardé (ZS) est dérivé d'un flanc du signal d'amorçage (ZX) et est mémorisé,
   d) un signal d'amorçage (ZS ou ZX) est positionné à l'instant respectivement mémorisé en dernier lieu.

7. Dispositif pour la mise en oeuvre du procédé suivant l'une des revendications 1 à 6, comportant un détecteur de référence (8) pour dériver des signaux de référence (X) ainsi qu'un dispositif de commande (14) raccordé à ce détecteur pour préparer des signaux d'amorçage retardés (Z), le dispositif de commande (14) comportant des moyens à l'aide desquels respectivement un signal d'amorçage (ZS), qui succède à un intervalle de temps prédéterminé de façon fixe (P), peut être dérivé à partir des signaux d'amorçage (Z) chaque fois qu'aucun signal de référence (X) n'est déterminé au cours de cet intervalle de temps (P).

8. Dispositif suivant la revendication 7, comportant un dispositif de commande (14), qui comporte
a) un compteur (22) exécutant un comptage libre,
b) une unité de contrôle (16), qui lit le contenu du compteur (22) à un instant déterminé par le signal de référence (X),
c) un registre (20), qui est chargé par l'unité de contrôle (16) avec une valeur qui est formée par la somme du contenu lu et d'un retard prédéterminé (DT), et
d) comporte un dispositif comparateur (18), qui compare le contenu du compteur (22) au contenu du registre (20) et exécute le positionnement d'un signal d'amorçage (Z) en fonction du résultat de la comparaison.

1/2

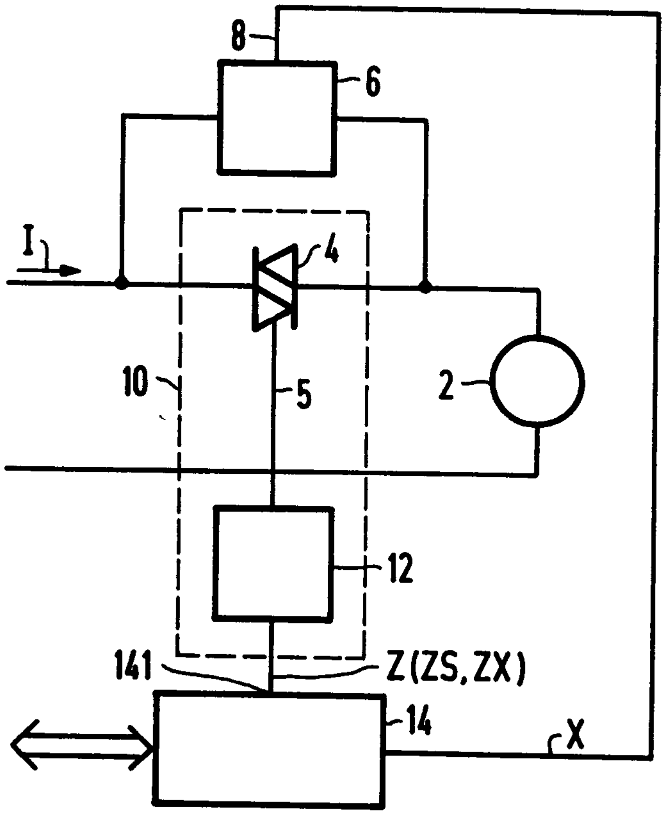


FIG 1

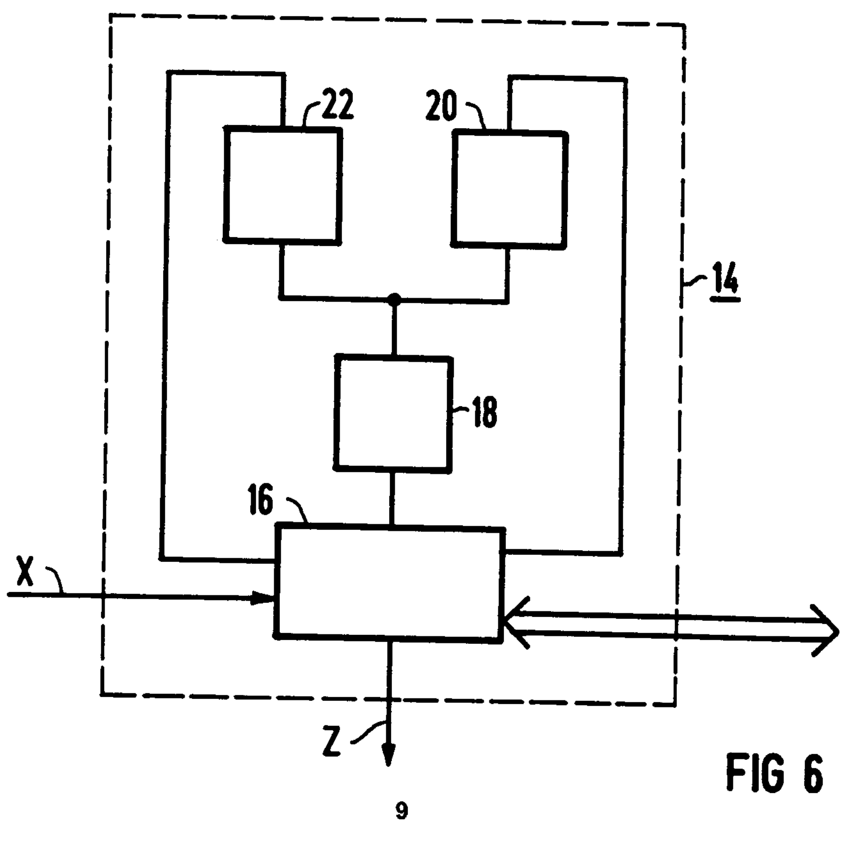


FIG 6

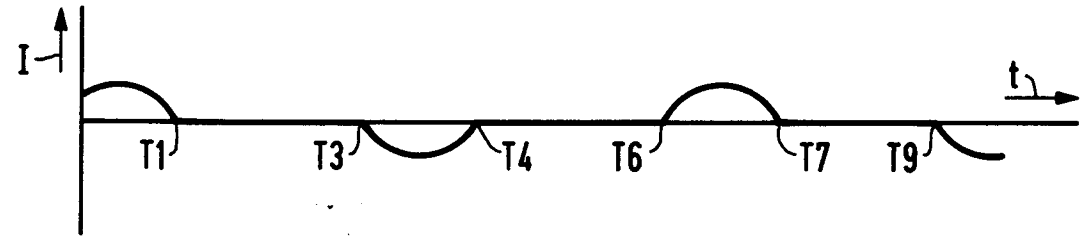


FIG 2

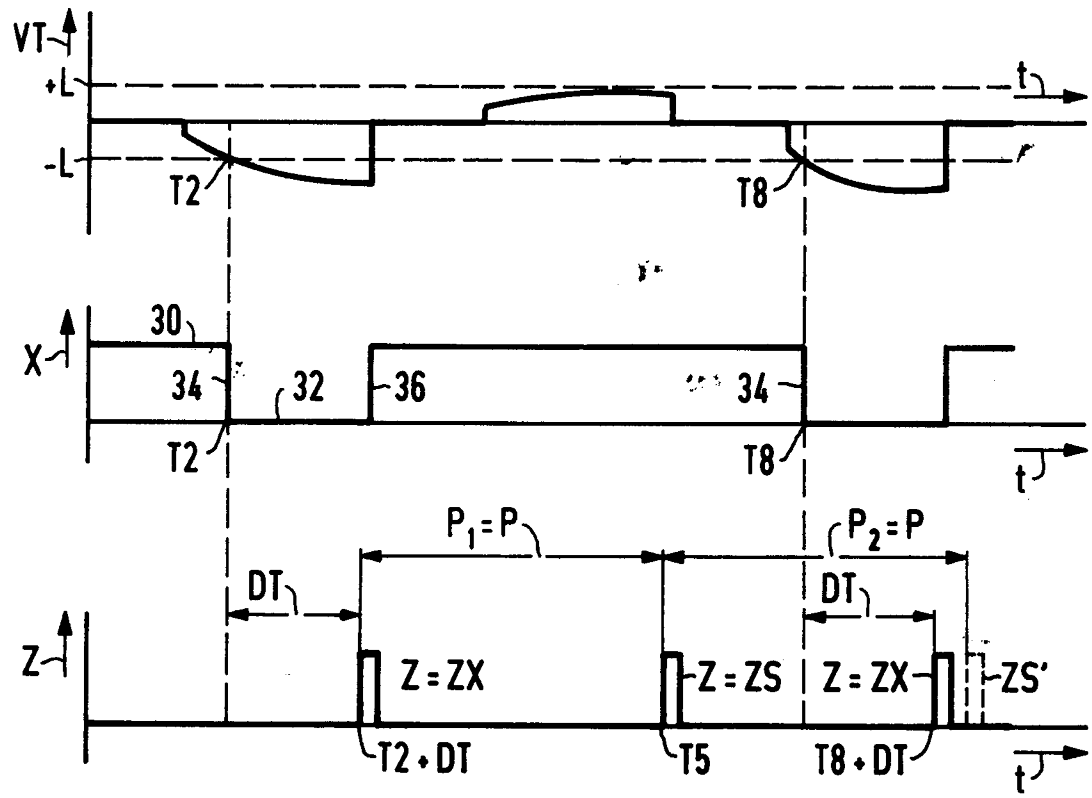


FIG 3

FIG 4

FIG 5

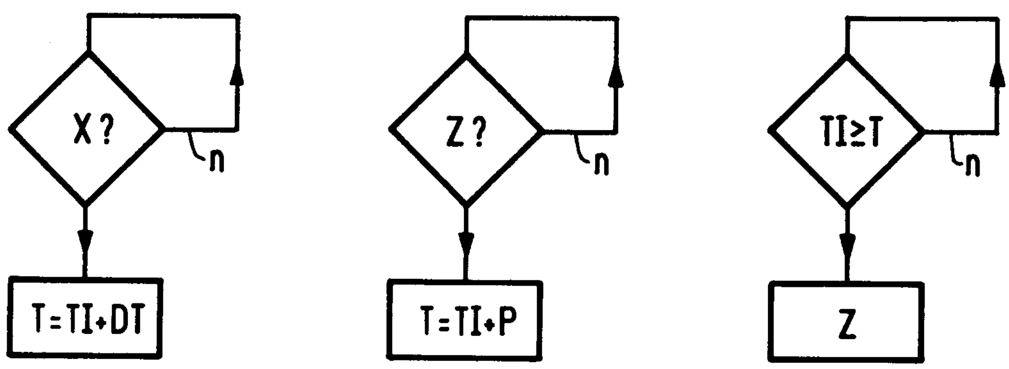


FIG 7